# EUROPEAN PATENT SPECIFICATION

(11) **EP 2 441 953 B1**
(45) Date of publication and mention of the grant of the patent: **25.12.2013**
(21) Application number: 11185183.8
(22) Date of filing: 14.10.2011
(51) Int. Cl.: F03D 5/00

(54) **Wind generator by means of deformation of at least one elastomeric element**
Windgenerator durch Verformung von mindestens einem Elastomerelement
Aérogénérateur par déformation d'au moins un élément en élastomère

(30) Priority: 15.10.2010 IT MI20101889
(43) Date of publication of application: 18.04.2012
(73) Proprietor: Universita' degli Studi di Genova, 16126 Genova (IT)
(72) Inventor: Boragno, Corrado, 16134 GENOVA (IT)
(74) Representative: De Ros, Alberto

(56) References cited:
- WO-A1-2008/151008
- WO-A2-2009/106836
- US-A1- 2006 113 878
- US-A1- 2008 129 254

## Description

### Field of the invention

The present invention relates to a wind generator by means of deformation of at least one elastomeric capacitor. Wind generators based on elastic bands are known from WO2008/151008. Such generators comprise oscillating magnets attached on the bends and external coils.

### Prior art

The technology of elastomeric capacitors is known and was developed for making actuators called artificial muscles, i.e. they convert electrical energy to mechanical energy.

An elastomeric capacitor consists of an elastomeric dielectric, i.e. it is able to deform if subjected to mechanical stress, covered on two faces with a conductive material that is able to follow the mechanical deformations of the elastomer.

If this capacitor is charged electrically during the deformation phase, the electrical energy available at the end of the deformation phase is greater than that required for charging the capacitor, as the mechanical energy accumulated during deformation is converted to electrical energy.

This principle is discussed in document WO 2007/130252 (PCT/US2007/008572).

It can be demonstrated that the percentage energy gain is directly proportional to the percentage deformation.

Unfortunately, however, wind generation by means of elastomeric capacitors is not sufficiently advanced to permit the construction of an actual, functioning wind generator.

### Summary of the invention

The aim of the present invention is to provide a wind generator that utilizes the aforementioned phenomenon of conversion of mechanical energy to electrical energy, when the mechanical deformation is due to the wind, supplying precise indications and design parameters of an actually functioning generator.

The present invention relates to a wind generator by means of deformation of at least one elastomeric capacitor, according to claim 1.

The present innovation allows the concrete development of a novel category of wind generators which, at least for low and medium power applications (1-10 kW), do not require equipment of large dimensions such as that required for the usual wind generators with rotating blades and with efficient conversion of mechanical energy to electrical energy.

The dependent claims describe preferred embodiments of the invention, forming an integral part of the present description.

### Brief description of the drawings

Further characteristics and advantages of the invention will become clearer from the detailed description of preferred, but not exclusive, embodiments of a wind generator by means of an elastomeric capacitor, illustrated as a non-limiting example, with the aid of the appended drawings in which:
Fig. 1 shows a preferred configuration of the generator according to the invention,
Fig. 2 shows another preferred configuration of the generator according to the invention,
Fig. 3 shows the variation of the capacitance of a component of the generator of Fig. 1 due to the deformations induced on said component by the action of the wind.

The same reference numbers and letters in the figures identify the same elements or components.

### Detailed description of a preferred embodiment of the invention

The generator of the present invention can comprise one or more bands of elastomeric material covered on the corresponding two faces with a conductive material to define an elastomeric capacitor and fixed at the ends in order to remain extended.

The action of the wind causes vibrations and oscillations in the band, which is induced to alternating phases of extension and contraction.

Since said band(s) define an elastomeric capacitor, electrical energy can be produced by the latter.

The bands of elastomeric material can be for example:
- dielectric material consisting of an acrylic band covered with a carbon-filled conductive grease, or
- dielectric material consisting of a silicone band covered with two layers of conductive silicone material.

Advantageously, the first type is known and is commercially available.

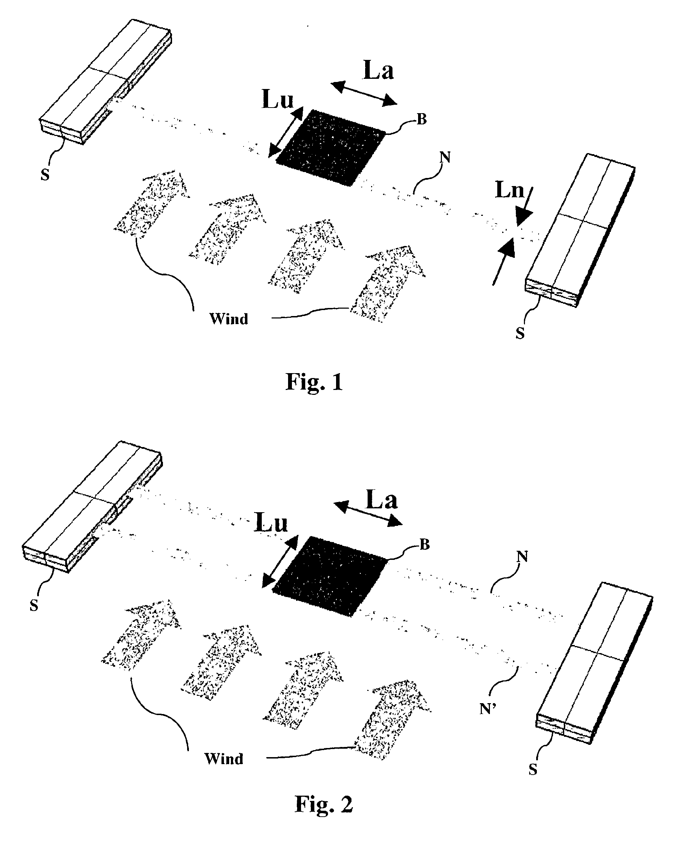

The generator, according to the three preferred variants of the invention, comprises:
- a band N defining an elastomeric capacitor fixed stably at the two opposite ends (variant not shown), or
- a band N defining an elastomeric capacitor fixed stably at the two opposite ends and having a wind vane B connected in the middle of the band so that the plane of longitudinal extension of the wind vane lies in one and the same plane of the disposition of the band, see Fig. 1,
- two parallel bands N and N', each defining an elastomeric capacitor fixed stably at the two opposite ends and a wind vane B connected by two opposite edges, respectively and preferably, to the middles of the bands, similarly to the preceding variant, see Fig. 2.

The ends of the band(s) can be fixed for example to a pair of supporting elements S that keep the longitudinal extension of the band(s) transverse to the direction of the wind with the faces parallel to a direction of the wind.

The wind vane is in both cases fixed to the bands on one edge. Connection can be provided between wind vane and band N by partial overlap between them, fastening the surfaces in contact between them. In this way, the action of the wind vane, moved by the wind, is transmitted more efficiently to the band.

In particular, in the case of two or more bands, these are parallel to one another and arranged so that they belong to one and the same plane.

When the wind impinges on the band or the band(s) and the wind vane together, the interaction with the fluid causes a periodic motion of the band(s). Thus, the deformation induced in the elastomeric capacitors passes from a state of maximum deformation to one of complete relaxation.

The wind vane, under the action of the wind, tends to rise and fall, inducing elongation and twisting in the band(s).

The wind vane can also be connected to the bands in different ways so as to favour twisting or elongating stresses in the band.

It is preferable for an end portion of a surface of the wind vane B to be attached to a face of the first band N. In the case of two bands, two opposite end portions, for example, of one and the same face are connected to the two parallel bands, in the respective middles.

The first variant, with a single band and without wind vane, has low efficiency and motion that is irregular and of small amplitude. It can, however, find application in simple devices.

The configurations including the wind vane are found to be more efficient, leading to deformations of up to 10% of the band(s) with a wind of about 3 m/s.

It is preferable for the weight of the wind vane, positioned at the centre of the band there, to be at least equal to 10 times the weight of the band, in order to increase its deformation significantly.

According to a preferred embodiment of the invention, for the purpose of maximizing the deformation of the band, it is preferable that:
- the wind vane has a length along the wind direction Lu equal to about 1.5-2 times the width Ln of the band
- the wind vane has a width La equal at most to 1/3 of the length of the band
- the wind vane consists of a material of low density, preferably of the order of 1 g/cm3 and semi-rigid,
- a mass is added and is positioned at the centre of the band: this mass should have at least 20-30 times the total weight of the band and the wind vane together,
- the band, preferably, is pre-stressed to obtain an elongation relative to the initial length, i.e. at rest, equal to 10-30%, since a smaller elongation makes the system unstable with winds at lower velocity, while a greater elongation makes it unstable at higher velocities,
- the band preferably has an elastic coefficient between 1 and 30 N/m, with an optimum value of 10 in operating conditions, i.e. with the pre-stress already applied. Advantageously, this value of elastic coefficient causes maximum elongation with a wind speed equal to about 6 m/s.

Tests have shown that the elastic coefficient should be optimized in relation to the velocity of the fluid. In particular, for increasing wind speeds, the elastic coefficient must be increased.

According to another variant, the stress applied to the band can be applied by means of a suitable electromechanical system able to regulate the stress applied to the band in relation to the wind speed, which can be measured, for example, by an anemometer, or obtained from real-time analysis of the voltage signal produced by the generator.

The wind vane can be rigid or semi-rigid and can have a plain profile or an airfoil section, in order to induce the maximum possible stressing on the elastomeric elements even at modest wind speeds.

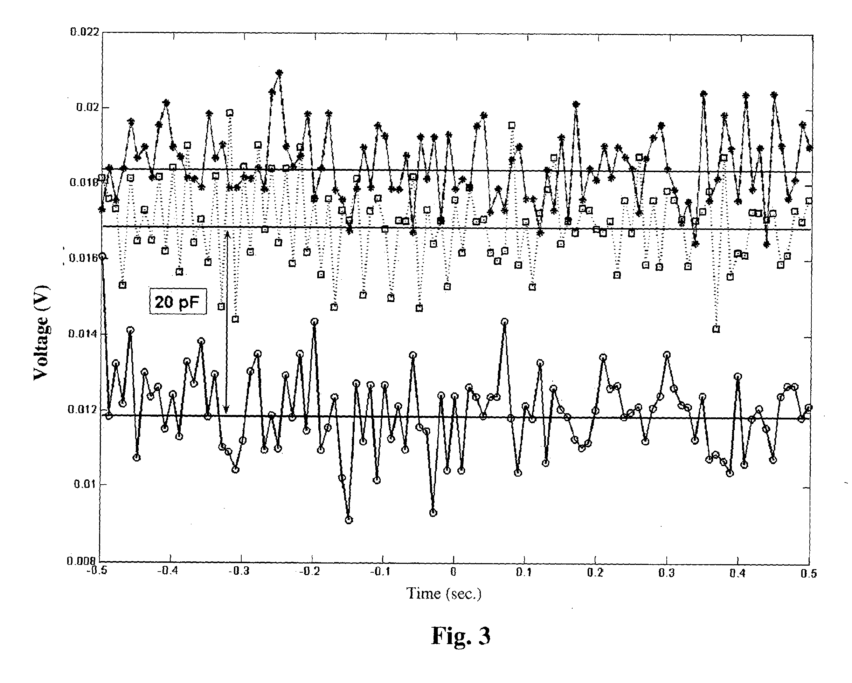

Fig. 3 shows the trace, obtained with a digital oscilloscope, of the increase in capacitance of the capacitor as a result of deformation induced by interaction with air in motion.

As an example of operation of the device, Fig. 3 shows measurements taken on a test band. The terminals of the elastomeric capacitor were connected in a Wien bridge for measurement of capacitance of the capacitor. The bottom curve (circles) shows the voltage value that is obtained when the elastomeric capacitor is at rest; the middle curve (squares) shows the voltage value that is recorded at the terminals of the elastomeric capacitor to which a conventional capacitor of capacitance 20 pF is connected in parallel: this curve is used for comparison; the top curve (asterisks) shows the voltage value that is obtained when the wind impinges on the elastomeric capacitor.

This curve reveals a percentage change in capacitance of the elastomeric capacitor of approx. 5%, corresponding to the measured percentage deformation.

## Claims

1. A wind generator by means of deformation of at least one elastomeric capacitor, comprising a first band (N) having opposite faces and opposite ends and defining an elastomeric capacitor firmly fixed at said opposite ends so that one longitudinal expansion of the band is transversal to a wind direction and wherein said faces are parallel to said wind direction.

2. A generator according to claim 1, wherein said opposite ends are fixed to an equal number of supporting elements (S).

3. A generator according to claim 2, further comprising a wind vane (B) having opposite surfaces, connected in the middle of the first band, with said opposite surfaces parallel to said wind direction.

4. A generator according to claim 3, wherein said at least one end portion of a surface of the wind vane (B) is attached to a face of the first band (N).

5. A generator according to claim 4, further comprising a second band (N') defining a second elastomeric capacitor, parallel and coplanar to said first band (N) and firmly fixed at respective opposite ends, and wherein
a first end portion of a surface of the wind vane (B) is attached to a face of the first band (N),
a second end portion of said surface, opposite to said first end portion, of the wind vane (B) is attached to a face of the second band (N').

6. A generator according to one of the claims from 3 to 5, wherein the length (Lu) of said wind vane (B) along the wind direction is from 1.5 to 2 times the transversal width of the bands (N, N') along the wind direction and/or wherein the width (La) of the wind vane (B) transversally to the wind direction is 1/3 the longitudinal length of the band (N,N').

7. A generator according to one of the claims from 3 to 6, wherein the density of said wind vane (B) is 1 g/cm³ and wherein the generator further comprises an additional mass placed at the middle line of the band (N, N') equal to 30 times the total weight of the band (N, N') and of the wind vane (B).

8. A generator according to one of the preceding claims, wherein said band (N, N') is pre-stressed with a longitudinal length increase between 10 and 30%.

9. A generator according to claim 8, wherein the band (N, N') with pre-stress applied has elastic coefficient between 1 and 30 N/m.

10. A generator according to claim 9, wherein said elastic coefficient is 10 N/m.

## Patentansprüche

1. Windgenerator mittels einer Verformung von zumindest einem elastomeren Kondensator, mit einem ersten Band (N), das gegenüberliegende Seiten und gegenüberliegende Enden besitzt und einen elastomeren Kondensator definiert, der fest an den gegenüberliegenden Enden fixiert ist, so dass eine Längsausdehnung des Bandes quer zu einer Windrichtung liegt und wobei die Seiten parallel zu der Windrichtung liegen.

2. Generator nach Anspruch 1,
wobei die gegenüberliegenden Enden an einer gleichen Anzahl von Trägerelementen (S) fixiert sind.

3. Generator nach Anspruch 2,
ferner mit einem Windflügel (B), der gegenüberliegende Flächen aufweist und in der Mitte des ersten Bandes verbunden ist, wobei die gegenüberliegenden Flächen parallel zu der Windrichtung sind.

4. Generator nach Anspruch 3,
wobei der zumindest eine Endabschnitt einer Fläche des Windflügels (B) an einer Seite des ersten Bands (N) befestigt ist.

5. Generator nach Anspruch 4,
ferner mit einem zweiten Band (N'), das einen zweiten elastomeren Kondensator definiert, parallel und koplanar zu dem ersten Band (N) ist und fest an jeweiligen gegenüberliegenden Enden fixiert ist, und wobei ein erster Endabschnitt einer Fläche des Windflügels (B) an einer Seite des ersten Bands (N) befestigt ist,
ein zweiter Endabschnitt der Fläche gegenüberliegend dem ersten Endabschnitt des Windflügels (B) an einer Seite des zweiten Bands (N') befestigt ist.

6. Generator nach einem der Ansprüche 3 bis 5,
wobei die Länge (Lu) des Windflügels (B) entlang der Windrichtung zwischen dem 1,5- bis 2-fachen der Querbreite der Bänder (N, N') entlang der Windrichtung beträgt und/oder wobei die Breite (La) des Windflügels (B) quer zu der Windrichtung 1/3 der längsgerichteten Länge des Bands (N, N') beträgt.

7. Generator nach einem der Ansprüche 3 bis 6,
wobei die Dichte des Windflügels (B) 1 g/cm³ beträgt, und wobei der Generator ferner eine zusätzliche Masse, die an der Mittellinie des Bandes (N, N') angeordnet ist, gleich dem 30-fachen des Gesamtgewichts des Bands (N, N') und des Windflügels (B) umfasst.

8. Generator nach einem der vorhergehenden Ansprüche,
wobei das Band (N, N') mit einer Zunahme der längsgerichteten Länge zwischen 10 und 30 % vorgedehnt ist.

9. Generator nach Anspruch 8,
wobei das Band (N, N'), auf das eine Vordehnung aufgebracht ist, einen Elastizitätskoeffizienten zwischen 1 und 30 N/m besitzt.

10. Generator nach Anspruch 9,
wobei der Elastizitätskoeffizient 10 N/m beträgt.

## Revendications

1. Aérogénérateur par déformation d'au moins un condensateur élastomère comprenant une première bande (N) ayant des faces opposées et des extrémités opposées et définissant un condensateur élastomère fermement fixé auxdites extrémités opposées de sorte qu'une dilatation longitudinale de la bande soit transversale à une direction du vent et dans lequel lesdites faces sont parallèles à ladite direction du vent.

2. Générateur selon la revendication 1, dans lequel lesdites extrémités opposées sont fixées à un nombre égal d'éléments porteurs (S).

3. Générateur selon la revendication 2, comprenant en outre une girouette (B) ayant des surfaces opposées, raccordée au milieu de la première bande, lesdites surfaces opposées étant parallèles à ladite direction du vent.

4. Générateur selon la revendication 3, dans lequel ladite au moins une portion d'extrémité d'une surface de la girouette (B) est arrimée à une face de la première bande (N).

5. Générateur selon la revendication 4, comprenant en outre une deuxième bande (N') définissant un deuxième condensateur élastomère, parallèle et coplanaire à ladite bande (N) et fermement fixé à des extrémités opposées respectives, et dans lequel
une première portion d'extrémité d'une surface de la girouette (B) est arrimée à une face de la première bande (N),
une deuxième portion d'extrémité de ladite surface, opposée à ladite première portion d'extrémité, de la girouette (B) est arrimée à une face de la deuxième bande (N').

6. Générateur selon l'une des revendications 3 à 5, dans lequel la longueur (Lu) de ladite girouette (B) le long de la direction du vent est de 1,5 à 2 fois la largeur transversale des bandes (N, N') le long de la direction du vent et/ou dans lequel la largeur (La) de la girouette (B) transversalement à la direction du vent est de 1/3 la longueur longitudinale de la bande (N, N').

7. Générateur selon l'une des revendications 3 à 6, dans lequel la masse volumique de ladite girouette (B) est de 1 g/cm³ et dans lequel le générateur comprend en outre une masse supplémentaire placée au niveau de la ligne médiane de la bande (N, N') égale à 30 fois le poids total de la bande (N, N') et de la girouette (B).

8. Générateur selon l'une des revendications précédentes, dans lequel ladite bande (N, N') est précontrainte avec une augmentation de longueur longitudinale entre 10 et 30 %.

9. Générateur selon la revendication 8, dans lequel la bande (N, N') à laquelle une précontrainte a été appliquée à un coefficient d'élasticité entre 1 et 30 N/m.

10. Générateur selon la revendication 9, dans lequel ledit coefficient d'élasticité est de 10 N/m.
